# FASCICULE DE BREVET EUROPEEN

(11) **EP 1 679 786 B1**
(45) Date de publication et mention de la délivrance du brevet: **18.05.2016**
(21) Numéro de dépôt: 06290014.7
(22) Date de dépôt: 05.01.2006
(51) Int. Cl.: H02J 1/08, H02J 7/14, F02N 11/08, F02N 11/14, H02P 1/18

(54) **Système de démarrage et de génération électrique pour véhicule automobile**
System zum Anfahren und zur Erzeugung von elektrischer Energie eines Kraftfahrzeugs
System for starting and power generation in a vehicle

(30) Priorité: 05.01.2005 FR 0500094
(43) Date de publication de la demande: 12.07.2006
(73) Titulaire: VALEO EQUIPEMENTS ELECTRIQUES MOTEUR, 94017 Créteil Cedex (FR)
(72) Inventeur: Sebille, Dominique, 94110 Arcueil (FR); Lecole, Brice, 75012 Paris (FR)
(74) Mandataire: Gamonal, Didier

(56) Documents cités:
- WO-A-03/088471
- FR-A- 2 850 071
- GB-A- 2 373 648
- US-A- 2 521 969
- US-A1- 2004 112 320

## Description

### Domaine

La présente invention concerne un système de démarrage et de génération électrique pour un véhicule automobile.

### Etat de la technique

Ainsi qu'on le sait les véhicules automobiles comportent au moins un réseau électrique bipolaire, dit réseau de bord, sur lequel une puissance électrique est disponible et consommée par les différentes charges électriques installées à bord du véhicule.

Ces charges électriques comprennent notamment les équipements et les consommateurs véhicule, tels que la direction électrique assistée, le système d'éclairage, le système d'essuyage le dispositif de freinage, le dispositif de climatisation et l'autoradio.

Ces charges sont connectées électriquement au réseau de bord embarqué à bord du véhicule automobile.

Le réseau électrique de bord est également relié électriquement aux bornes d'une batterie électrochimique et à un alternateur. La batterie est adaptée à être chargée à l'aide de l'alternateur, dont l'arbre de rotation est connecté via un dispositif de transmission, tel qu'un dispositif de transmission comportant au moins une courroie, au moteur thermique du véhicule.

Un alternateur conventionnel comporte, à l'intérieur d'un carter en au moins deux parties, un stator induit entourant un rotor inducteur, tel qu'un rotor à griffes ou à pôles saillants, solidaire d'un arbre lui-même solidaire d'un organe d'entraînement tel qu'une poulie dans le cas d'un transmission à courroie.

Le stator comporte un corps de stator, tel qu'un paquet de tôles à encoches, portant des enroulements à raison d'au moins un enroulement par phase que comporte l'alternateur. Les sorties des enroulements sont reliées électriquement à un pont redresseur, tel qu'un pont de diodes, pour redresser le courant alternatif produit dans les enroulements des phases du stator en courant continu notamment pour alimenter électriquement la batterie. Le pont est relié aux bornes de la batterie.
L'alternateur comporte également un régulateur de tension pour limiter la tension produite par l'alternateur et protéger la batterie. Ce régulateur pilote la tension d'au moins un bobinage inducteur que comporte le rotor.

Un tel alternateur polyphasé, par exemple refroidit par air, est décrit par exemple dans le document EP 0 515 259.

Le moteur thermique qui entraîne le véhicule, est démarré de manière conventionnelle par un démarreur, qui comporte un moteur électrique.

Le démarreur et l'alternateur sont des machines électriques tournantes du type électromécanique - comportant au moins un stator à l'intérieur duquel est monté un rotor- qui, ainsi que la batterie électrochimique, appartiennent au système de démarrage et de génération électrique du véhicule automobile, qui comporte une commande de démarrage doté d'un interrupteur actionné par une clé de contact ou une carte.

Le démarreur, de forte puissance, tire son énergie électrique de la batterie, qui notamment pour cette raison doit être rechargée par l'alternateur adapté à alimenter électriquement le réseau de bord et les charges électriques.

En variante on utilise pour le démarrage du véhicule des machines composées qui fonctionnent ou bien comme alternateur (mode générateur électrique) pour charger le réseau de bord et la batterie ou bien comme moteur électrique (mode moteur électrique), notamment comme démarreur pour réaliser le démarrage du moteur thermique du véhicule.

Cette machine composée est appelée alterno-démarreur et est réversible car elle permet de transformer de l'énergie mécanique en énergie électrique lorsque l'arbre du rotor de la machine est entraîné par le moteur thermique via le dispositif de transmission (fonctionnement en mode générateur électrique). Elle permet également de transformer de l'énergie électrique en énergie mécanique lorsque l'arbre du rotor de la machine entraîne le moteur thermique via le dispositif de transmission (fonctionnement en mode moteur électrique).

Cet alterno-démarreur appartient au système de démarrage et de génération électrique du véhicule automobile et est décrit par exemple dans le document FR A 2 745 445, le fonctionnement en mode moteur électrique de la machine, par exemple du type triphasé, s'effectuant dans ce cas en imposant un courant continu dans le rotor inducteur et en délivrant sur les phases du stator des signaux déphasés de 120°.

Le pont redresseur est dans ce cas également un pont de commande, appelé onduleur, en mode moteur électrique et est dans ce cet exemple un pont à transistors du type MOSFET commandés par une unité électronique de commande et de contrôle.

L'alterno-démarreur est donc relié au réseau de bord et à la batterie électrochimique via le pont à transistors, l'unité électronique de contrôle et de commande comportant des dispositifs de pilotage, appelés drivers, pour agir sur les grilles des transistors et un circuit de gestion doté d'un microcontrôleur pour commander les drivers.

Cette unité électronique et le pont appartiennent à un dispositif de commande monté, dans un mode de réalisation, dans un boîtier électronique implanté à l'extérieur du carter de l'alterno-démarreur, et connecté à l'alternateur-démarreur par des moyens de liaison électrique, par exemple une liaison à connecteurs et câbles décrite dans le document WO 02/060038.

Ce boîtier compote également le régulateur de tension.

Le pont à transistors appartient à un module de puissance et l'unité électronique de commande et de contrôle à un module de plus faible puissance.

En variante le pont est porté par le carter de l'alterno-démarreur, ainsi que les drivers de pilotage du pont, comme décrit par exemple dans le document WO 2004/006423, la technologie de report de puces étant utilisée.

Bien entendu il existe des moyens pour le suivi de la position angulaire du rotor afin d'injecter au bon moment du courant électrique dans l'enroulement de phase concerné. Ces moyens comportent par exemple des capteurs à effet Hall associés à une cible magnétique solidaire en rotation du rotor ou un résolveur.

Les capteurs envoient des informations à l'unité électronique de commande et de contrôle, plus précisément à l'unité de gestion, qui pilote, via les drivers, les transistors du type MOSFET.

Un tel alterno-démarreur peut, selon sa puissance, servir aussi de moteur électrique d'entraînement auxiliaire du véhicule, notamment pour entraîner celui-ci lors de manoeuvres au parking, ou de moteur électrique auxiliaire pour éviter que le moteur thermique cale, cette fonction d'assistance étant appelée fonction « boost ».

En variante cette machine peut servir de moteur électrique auxiliaire pour entraîner par exemple le compresseur du dispositif de climatisation du véhicule automobile lorsque le moteur thermique est arrêté notamment au feu rouge, l'alterno-démarreur permettant de redémarrer le moteur thermique, cette fonction d'arrêt du moteur thermique au feu rouge et de redémarrage du moteur thermique permet de réduire la consommation de carburant et est appelée fonction « Stop and Go ».

En variante l'alterno-démarreur est associé à un démarreur pour notamment démarrer le moteur thermique à froid comme décrit par exemple dans le document FR A 2 797 472 (WO 01/11231).

Le système de démarrage et de génération électrique du véhicule automobile à moteur thermique comporte donc dans tous les cas un dispositif, dit dispositif électromécanique, comprenant au moins un alternateur et un démarreur ou un alterno-démarreur associé éventuellement à un démarreur supplémentaire.

Lorsque l'alternateur et le démarreur sont implantés de manière adjacente ou dans le cas d'un alterno-démarreur, le dispositif électromagnétique forme une unité dite unité électromagnétique.

Il est souhaitable d'optimiser les modes de fonctionnement du dispositif électromécanique pour cumuler l'avantage d'un couple élevé en mode moteur électrique, notamment pour démarrer le moteur thermique du véhicule, et l'avantage d'une capacité de génération électrique élevée en mode générateur électrique pour alimenter le réseau de bord du véhicule automobile.

Dans ce cas on peut songer à faire appel à une solution du type de celle décrite dans le document WO 03/088471 comprenant un convertisseur de tension de courant continu en courant continu et un dispositif de stockage d'énergie susceptible d'être reliée à l'unité électromécanique par un commutateur.

Dans une forme de réalisation ce dispositif de stockage d'énergie consiste en une deuxième unité de conversion électrochimique à savoir une deuxième batterie.

Cette solution donne satisfaction, néanmoins cela nécessite de changer cette deuxième batterie pendant la durée de vie du véhicule.

Il est souhaitable que cette deuxième batterie soit utile pendant que le véhicule roule.

Le brevet US 2 521 969 décrit un système de démarrage électrique comportant deux batteries pouvant être reliées en série ou en parallèle grâce à des contacts, avec les caractéristiques techniques dans le préambule de la revendication indépendente 1.

### Objet de l'invention

Un but de l'invention est donc de répondre à ce souhait.

Un but de l'invention est donc de créer un système de démarrage et de génération électrique pour véhicule automobile permettant la réalisation de fonctions combinées de production de puissance électrique et de production de puissance mécanique de sorte que le dispositif électromécanique fonctionne de manière optimale et que les unités de conversion électrochimique soit rechargées.

Un autre but est d'augmenter la durée de vie de la deuxième unité de conversion électrochimique.

La présente invention concerne un dispositif de commande d'un système de démarrage et de génération électrique, pour coopérer avec le réseau de bord bipolaire d'un véhicule automobile à moteur thermique avec les caractéristiques techniques de la revendication indépendante 1.

Grâce à l'invention pendant la phase de démarrage du moteur thermique du véhicule automobile les deux unités de conversion électrochimique sont montées en série en sorte que le couple (et donc la puissance mécanique) du dispositif électromécanique est augmenté sous une tension plus élevée. Lorsque le moteur thermique a démarré les deux unités de conversion électrochimique sont connectées en parallèle ce qui permet de cumuler les réserves d'énergie et donc d'obtenir une puissance électrique plus élevée.

Grâce à l'invention les deux unités de conversion électrochimique sont rechargées lorsque l'on passe en mode générateur électrique en sorte que la durée de vie de la deuxième unité de conversion électrochimique est augmentée.

Les deux unités sont utiles lorsque le véhicule roule.

On appréciera que la solution selon l'invention est simple et économique.

En particulier on peut supprimer le convertisseur de tension.

La solution selon l'invention est souple en ce qui concerne l'implantation du commutateur et de l'interrupteur.

En effet dans une forme de réalisation l'interrupteur est destiné à être connecté entre la polarité de plus faible potentiel et donc de plus faible tension du réseau de bord et la borne de plus faible tension de la deuxième unité de conversion électrochimique, tandis que le commutateur est destiné à être connecté entre le deuxième polarité de plus forte tension du réseau de bord et la borne de plus forte tension de la première unité de conversion électrochimique.

En variante l'interrupteur est destiné à être connecté entre la polarité de plus fort potentiel et donc de plus forte tension du réseau de bord et la borne de plus forte tension de la deuxième unité de conversion électrochimique, tandis que le commutateur est destiné à être connecté entre le deuxième polarité de plus faible tension du réseau de bord et la borne de plus faible tension de la première unité de conversion électrochimique.

Les unités de conversion électrochimique consistant dans un mode de réalisation en des batteries, on peut faire appel à des batteries de même tension nominale, par exemple des batterie du type standard à tension nominale de 12V, en sorte que pendant la phase de démarrage du moteur thermique on bénéficie d'une tension de 24V.

On peut utiliser cette propriété lors de la fonction boost pour notamment éviter que le moteur thermique cale. On peut utiliser cette propriété pour réaliser la fonction Stop and GO.

Lorsque le moteur thermique a démarré les batteries sont connectées en parallèle ce qui permet de cumuler les réserves d'énergie à la tension de 12V.

Le dispositif électromécanique consistant en une unité électromécanique comportant un alterno-démarreur, lors de la phase de démarrage du moteur thermique (fonctionnement en mode moteur électrique) on peut démarrer des moteurs Diesel de plus forte cylindrée.

Suivant d'autres caractéristiques prises isolément ou en combinaison
le dispositif électromécanique, sous la forme d'une unité électromécanique, comprenant au moins un alterno-démarreur, des moyens de limitation sont prévus pour, lorsque l'alterno-démarreur fonctionne en mode moteur électrique, limiter le courant dans l'onduleur pour amélioration de la fiabilité de l'alterno-démarreur et ménager celui-ci ;
les moyens de limitation consistent dans un mode de réalisation en un choix des résistances internes des batteries ;
les moyens de limitation consistent en une résistance de valeur déterminée agencée entre les deux unités de conversion électrochimique, lorsque l'unité électromécanique fonctionne en mode moteur électrique ;
la résistance déterminée consiste en une résistance répartie, telle qu'un câble de liaison, notamment lorsque les deux batteries sont éloignées l'une de l'autre ;
un interrupteur supplémentaire est prévu pour une bonne recharge des unités de conversion électrochimique lorsque celles-ci ne sont pas à la même température notamment lorsque les deux batteries ne sont pas montées dans le même compartiment du véhicule ;
le commutateur comporte deux interrupteurs à simple contact pour simplification dudit commutateur,
des moyens de sécurité sont prévu pour, lorsque le dispositif électromécanique fonctionne en mode moteur électrique, éviter que l'interrupteur soit fermé lorsque le commutateur est dans la deuxième position et éviter un court-circuit.

Ainsi qu'on l'aura compris les moyens de limitation font avantageusement appel à au moins une résistance de faible valeur pour réduire les échauffements.

Les moyens de sécurité consiste dans un mode de réalisation en une tige de commande portant deux contacts mobiles soumis chacun à l'action d'au mois un ressort, des épaulements portés par la tige de commande étant prévus pour l'appui des ressorts et/ou pour limiter les mouvement des contacts mobiles.

Cette solution fait appel de manière simple et économique à trois interrupteurs échelonnés par rapport à la tige.

### Brève description des dessins

D'autres caractéristiques et avantages de l'invention seront mieux compris à l'aide de la description et des figures annexées parmi lesquelles :
- la figure 1 illustre de manière schématique un premier mode de réalisation d'un système de démarrage et de génération électrique selon l'invention dans un premier état de fonctionnement ;
- la figure est une figure analogue à a figure 1 pour un deuxième état de fonctionnement avec présence d'un moyen de limitation du courant dans l'onduleur d'un alterno-démarreur sous la forme d'une résistance en série ;
- la figure 3 est une figure analogue à la figure 2 avec présence d'un moyen de limitation du courant dans l'onduleur d'un alterno-démarreur sous la forme d'une résistance en série ;
- la figure 4 est une figure analogue à la figure 2 pour un second mode de réalisation de l'invention comprenant un interrupteur supplémentaire pour recharger de manière indépendante les deux unités de conversion électrochimique ;
- la figure 5 est une vue analogue à la figure 4 pour un troisième mode de réalisation de l'invention ;
- les figures 6 à 11 représentent différents états de fonctionnement d'un quatrième mode de réalisation de l'invention comprenant un moyen de sécurité pour éviter tout court-circuit lorsque l'unité électromécanique fonctionne en mode moteur électrique ;
- les figures 12 et 13 sont des vues analogues à la figure 1 pour respectivement un cinquième et un sixième mode de réalisation de l'invention.

### Description de modes de réalisation de l'invention

Par simplicité, les éléments communs aux différentes figures seront affectés des mêmes signes de référence.

Pour mémoire on rappellera que dans un véhicule automobile un dipôle présente une borne connectée à la masse électrique et une seconde borne à un potentiel positif.

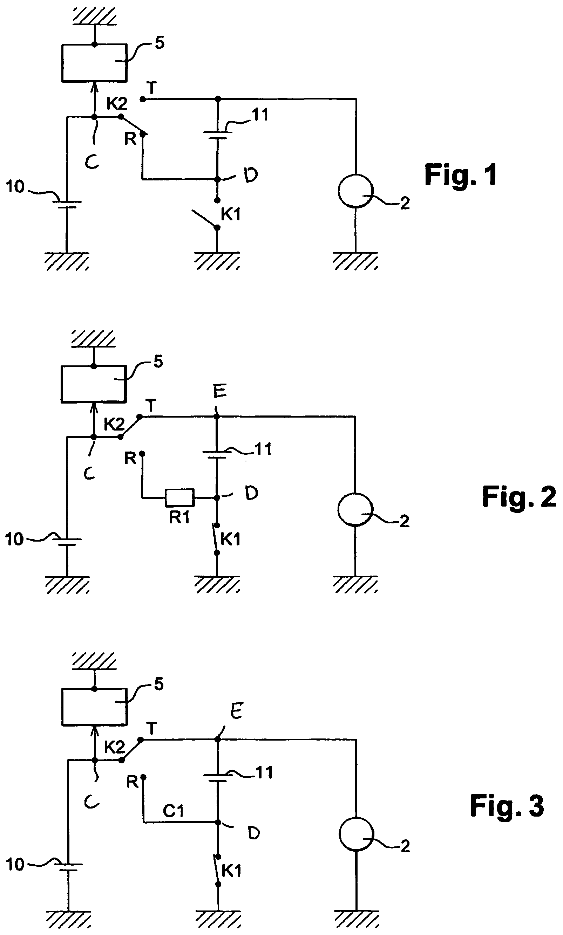

Dans les figures 1 à 11 il est prévu un dispositif électromécanique sous la forme d'une unité électromécanique 2 appartenant à un système de démarrage et de génération électrique pour véhicule automobile doté d'un moteur thermique.

Ce système est destiné à coopérer avec un réseau d'alimentation électrique constitué par le réseau de bord 5 bipolaire du véhicule sur lequel sont branchés les équipements et les consommateurs installés à bord du véhicule, c'est-à-dire les charges électriques connectées à la masse et au réseau de bord 5.

Le réseau de bord 5 comporte, d'une part, une polarité de plus faible potentiel ou tension connectée à la masse du véhicule et à la borne négative de plus faible potentiel d'une première unité électrochimique 10 de manière décrite ci-après et d'autre part, une autre polarité de plus fort potentiel ou tension connectée de manière décrite ci-après à la borne positive de plus fort potentiel d'une deuxième unité électrochimique11.

Le réseau de bord coopère avec :
- un dispositif électromécanique, dans les figure 1 à 11 sous la forme d'une unité électromécanique 2, permettant l'exécution des fonctions combinées de production d'électricité -fonctionnement en mode générateur électrique- et de production de puissance mécanique -fonctionnement en mode moteur électrique-, notamment pour démarrer le moteur thermique du véhicule automobile ;
- deux unités de conversion électrochimique distinctes, ici des batteries électrochimiques 10,11 comprenant deux bornes de polarité différente ;
- une unité de commutation destinée à connecter l'une et/ou l'autre des unités de conversion électrochimique sur le réseau de bord.

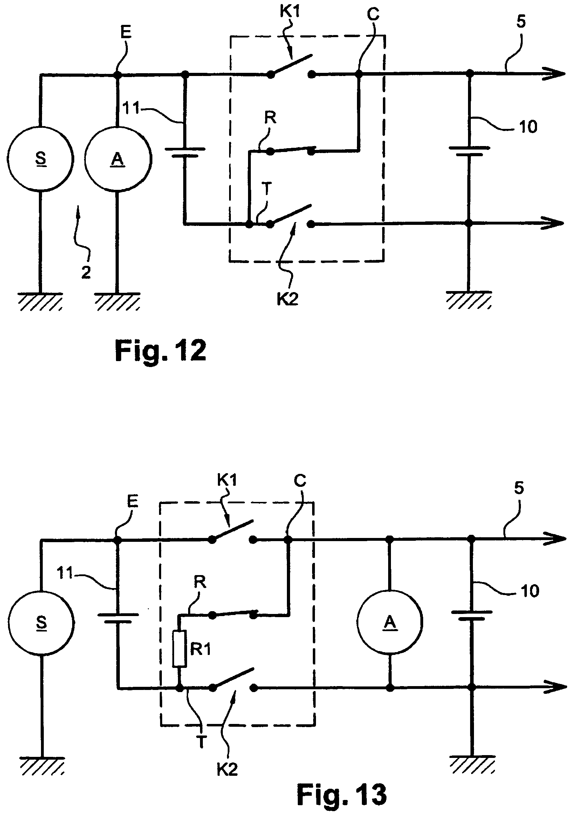

L'unité électromécanique peut être composée d'un alternateur et d'un démarreur montés de manière adjacente, de préférence en parallèle comme visible à la figure 12. Dans celle-ci le démarreur est référencé par la lettre S et l'alternateur par la lettre A.

Dans les figures 1 à 11 l'unité électromécanique 2 comporte une machine électrique tournante polyphasée et réversible c'est à dire un alterno-démarreur pour véhicule automobile.

Cet alterno-démarreur peut être associé à un démarreur comme décrit dans le document précité WO 01/11231.

Dans ce cas l'unité de commande et de contrôle, appelée aussi module de gestion, gère dans des conditions extrêmes, par exemple par grand froid en fonction de la température ou une absence de démarrage après un temps déterminé, le fonctionnement du démarreur et de l'alterno-démarreur adaptés à travailler ensembles dans une phase. On peut également prévoir une stratégie dans laquelle le démarreur et l'alterno-démarreur ne fonctionnent pas en même temps.

Cette machine, de manière précitée, est configurée pour fonctionner de manière réversible afin de produire, d'une part de l'énergie électrique (fonctionnement en mode générateur électrique) pour notamment charger ici suivant une caractéristique les deux unités de conversion électrochimique 10, 11, ici sous la forme de batteries du type électrochimique, et, d'autre part, de l'énergie mécanique (fonctionnement en mode moteur électrique) pour notamment démarrer le moteur thermique du véhicule automobile.

En mode moteur électrique l'alterno-démarreur assure au moins la fonction de démarreur pour démarrer le moteur thermique en entraînant mécaniquement celui-ci par exemple via un dispositif de transmission à au moins une courroie, et éventuellement, de manière précitée, réalise l'une au moins des fonctions « Stop and GO », « boost » et moteur électrique auxiliaire. En variante L'alterno-démarreur est intégré au volant de l'embrayage du véhicule ou est disposé entre l'embrayage et la boîte de vitesses du véhicule automobile comme décrit dans le document FR A 2 749 352.

L'alterno-démarreur est donc relié par un dispositif de transmission de mouvement au vilebrequin du moteur thermique du véhicule automobile.

En mode générateur électrique l'alterno-démarreur assure l'alimentation électrique des charges électriques et la charge des batteries électrochimiques.

L'unité de commutation comporte :
- un premier interrupteur destiné à être connecté entre une première polarité du réseau de bord et une première borne correspondante de la deuxième unité de conversion électrochimique ;
- un commutateur destiné à être connecté entre une deuxième polarité du réseau de bord et une première borne correspondante de la première unité électrochimique.

Dans une première position T le commutateur est relié à la fois à une deuxième borne de la deuxième unité de conversion électrochimique et à la deuxième borne de la première unité de conversion électrochimique.

Dans une seconde position R le commutateur est relié au point commun de l'interrupteur et de la deuxième unité de conversion électrochimique.
Plus précisément dans les figures 1 à 3, on a représenté un premier mode de réalisation de l'invention dans lequel l'unité de commutation est composée d'un interrupteur K1 et d'un commutateur K2.
L'interrupteur K1 et le commutateur K2 sont dans un mode de réalisation du type électromécanique (relais ou contacteur). En variante ils sont avantageusement du type électronique, c'est-à-dire du type statique et donc plus économiques, moins bruyant, plus fiable et d'une plus grande durée de vie.
On peut utiliser par exemple des transistors du type MOSFET par exemple de type N. De préférence chaque transistor est composé de plusieurs transistors montés en parallèle.

L'unité électromécanique 2, comportant ici de manière précitée au moins un alterno-démarreur, est connectée par une première borne à une première polarité comme la masse électrique, qui est également la première polarité du réseau de bord, et par une seconde borne à une seconde polarité comme une polarité continue de potentiel supérieur à la première polarité.

Ici la seconde borne de l'alterno-démarreur est la borne positive du pont redresseur et de commande (onduleur) visible par exemple dans les figures 1 des documents FR A 2 745 445 et WO 01/11231 sur laquelle se branche les interrupteurs, par exemple du type MOSFET, commandés par les signaux référencés A', B', C' dans ces documents.

Le réseau électrique de bord 5 tire son énergie électrique ici de la première batterie 10 du type électrochimique et de la deuxième batterie électrochimique 11 sous forme d'un courant électrique circulant entre une première polarité comme la masse électrique et une seconde polarité comme une tension positive relativement à la masse électrique. Les charges électriques sont connectées par leur deuxième borne au réseau 5 et par leur première borne à la masse.

Le système de démarrage et de génération électrique de l'invention, comporte l'unité de commutation K1, K2, représentée complètement aux figures, et une partie de commande et de contrôle, non représentée, appartenant avantageusement à l'unité de commande et de contrôle ou module de gestion de l'alterno-démarreur, qui comporte alors avantageusement des moyens du type électronique pour commander l'interrupteur K1 et le commutateur K2 de l'unité de commutation.

En variante la partie de commande et de contrôle appartient à une autre unité de commande et de contrôle, que présente le véhicule automobile.

La partie de commande et de contrôle (non représentée) permet de déterminer les états d'ouverture ou de commutation en fonction de modes de fonctionnement de l'unité électromécanique 2, du réseau de bord 5 et/ou des batteries 10, 11, comme un mode de fonctionnement en démarreur ou un mode de fonctionnement en alternateur pour notamment recharger les batteries et/alimenter électriquement le réseau de bord et les charges électriques.

Une première borne, ici la borne négative, de la seconde batterie 11, ou unité de conversion électrochimique, est connectée à une première polarité ou masse électrique par l'intermédiaire de l'interrupteur K1. Cette première polarité est la polarité de plus faible potentiel est la première polarité du réseau de bord 5.

Une première borne, ici la borne négative, de la première batterie 10, ou unité de conversion électrochimique, est directement connectée électriquement à la première polarité ou masse électrique.

Une seconde borne, ici la borne positive, de la première batterie ou unité de conversion électrochimique 10, portée à une seconde polarité, est connectée électriquement à un point commun C entre une deuxième polarité du réseau de bord 5, celle de plus fort potentiel, et un commutateur K2 qui prend deux positions ou états T et R, c'est à dire une position supplémentaire par rapport à l'interrupteur K1.

Dans la position R comme visible à la figure 1, position de repos, le commutateur K2 est connecté électriquement au point commun D entre l'interrupteur K1 et la borne négative de la seconde batterie 11 et relie ainsi électriquement les point C et D.

Dans la position T comme visible à la figure 2, position de travail lorsque le véhicule automobile roule, le commutateur K2 est connecté électriquement au point commun E entre la seconde borne positive de la seconde batterie 11 et la seconde borne de l'unité électromécanique 2, ici la seconde borne du pont redresseur et de commande (ou onduleur) de l'alterno-démarreur.

Le réseau de bord 5 étant connecté de manière précitée au point commun C entre l'interrupteur K2 et la borne positive de la première batterie 10, dans cette position ou état T le commutateur K2 relie les points C et E .

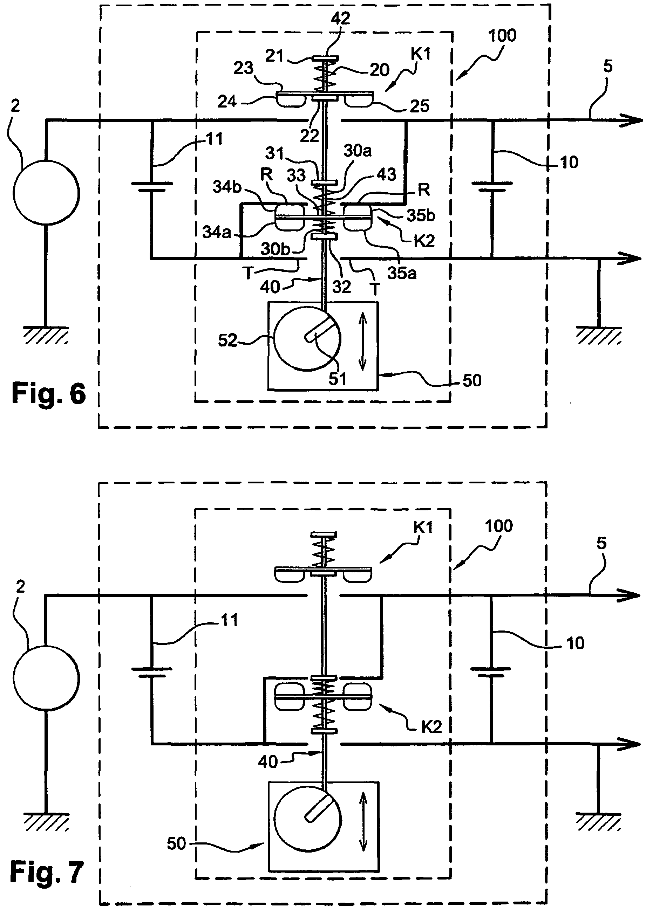

Des charges électriques du véhicule comme le système d'éclairage, le système d'essuyage, l'autoradio, etc..., sont branchées sur les polarités du réseau de bord 5 et sont représentées schématiquement par un rectangle en 200 à la figure 7.

A la figure 1, on a représenté un premier état de fonctionnement dans lequel se trouve le système de démarrage et de génération électrique selon l'invention.

L'interrupteur K1 est ouvert et le commutateur K2 est en position R. Cela est géré par la partie de commande et de contrôle précitée (non représentée) qui pilote à cet effet un moyen, par exemple celui décrit dans les figures 6 à 11, pour faire ouvrir l'interrupteur K1, puis le cas échéant, pour placer le commutateur K2 sur la position R.

Dans cet état de fonctionnement, les deux batteries 10 et 11 sont connectées en série, relativement à la seconde borne de l'unité électromécanique 2.

L'unité électromécanique 2 est donc placée à un potentiel constitué sensiblement de la somme des forces électromotrices des deux batteries 10 et 11.

En phase de démarrage du moteur thermique du véhicule automobile, l'alimentation de l'alterno-démarreur en mode moteur électrique sous une tension plus élevée, augmente son couple disponible et permet de démarrer plus facilement les moteurs thermiques nécessitant de forts couples de démarrage.

C'est le cas des moteurs Diesel ou encore des moteurs de fortes cylindrées, notamment au-delà de 3 litres de cylindrées.

Lorsque l'unité électromécanique est un alterno-démarreur 2, cette augmentation de la tension est donc favorable à son fonctionnement comme démarreur du moteur thermique (non représenté) du véhicule.

La seconde unité électrochimique 11 est rechargée en série avec la première batterie 10 par l'alterno-démarreur 2 lorsqu'il passe en mode générateur sous l'influence de son unité de contrôle et de commande (comme l'unité 3 de la figure 1 du document FR A 2 745 445 précité). On évite ainsi le recours à un chargeur flottant.

Lorsque la phase de démarrage est terminée, l'interrupteur K1 est fermé et le commutateur K2 passe en position T sous l'influence de la partie de contrôle , qui gère cela. A cet effet, la partie de commande et de contrôle (non représentée) pilote un moyen pour faire placer le commutateur K2 en position T, puis pour ouvrir l'interrupteur K1. On obtient ainsi l'état de la figure 2.

Un tel moyen est décrit par exemple dans les figures 6 à 11.

Dans cet état normal de travail de la figure 2, les deux batteries électrochimiques 10 et 11 sont connectées en parallèle et le réseau de bord 5 travaille avec les quantités d'énergie électrique stockées à la fois dans les batteries 10 et 11.

Avantageusement les deux batteries 10, 11 et donc les deux unité du type électrochimique, sont des batteries de même tension nominale, telle que des batteries du type standard de 12V.

On notera que dans la position normale de travail de la figure 2 les courants qui traversent le commutateur K2 et l'interrupteur K1 sont plus faible, par exemple au maximum de l'ordre de 150A, que le fort courant de démarrage, qui traverse le commutateur K2 dans la position de démarrage de la figure 1. Ce commutateur K2 est dimensionné en fonction de ce fort courant de démarrage, qui peut atteindre des valeurs supérieures à 600A.

L'unité de commutation est donc une unité de puissance.

Durant la phase de démarrage du moteur thermique les deux batteries sont en série en sorte que la tension à la seconde borne de l'alterno-démarreur est de 24V.

Lorsque le moteur thermique a démarré, les batteries sont en parallèle en sorte qu'une tension de 12V est présente au niveau de la seconde borne de l'alterno-démarreur avec un cumule de réserve d'énergie des batteries 10, 11.

L'augmentation de la tension aux bornes de l'alterno-démarreur 2 augmente le couple disponible sur l'arbre de l'alterno-démarreur, mais également le courant qui traverse l'onduleur lorsque l'alterno-démarreur fonctionne en mode moteur électrique.1.

Il en résulte que l'onduleur pourrait être soumis à des niveaux de courant dépassant le courant optimal de fiabilité de l'alterno-démarreur.

Selon une caractéristique, des moyens de limitation sont utilisés pour limiter le courant dans l'onduleur en dessous d'une valeur optimale de fiabilité.

Dans un premier mode de réalisation, les deux batteries 10 et 11 sont choisies avec des résistances internes qui sont supérieures à une valeur de seuil telle que la tension d'utilisation de ces batteries permet de garantir que le courant traversant l'onduleur sera inférieur au courant optimal de fiabilité précité.

Dans ces conditions, lorsque les batteries sont en série, le courant dans l'alterno-démarreur atteint un niveau optimal pour obtenir le couple nécessaire à un démarrage tout en restant dans la limite tolérable par l'onduleur électronique.

Dans un mode de réalisation les deux unités électrochimiques 10, 11 présente une résistance interne inférieure à 1 Ohm et supérieur à 8 milliohms.

Dans un second mode de réalisation, en mode moteur, on interpose une résistance série de limitation de courant dans l'onduleur.

Cette résistance série, de valeur typique égale à quelques milliohms, est dimensionnée de façon à ce qu'elle ne reçoit pas de courant pendant le fonctionnement en alternateur de l'unité électromécanique 2 ainsi qu'il est représenté à la figure 2.

A la figure 2, le commutateur K2 est disposé en position T, tandis qu'une résistance R1 série n'est pas visible pour l'alterno-démarreur 2 en mode générateur électrique.

En effet dans cette figure la résistance série R1 est connectée électriquement entre la position R du commutateur K2 et le point commun D de l'interrupteur K1 et de la deuxième batterie 11 directement montée en parallèle avec l'unité électromécanique 2. L'interrupteur K1 est fermé.

Il est clair que, lorsqu'on replace le commutateur K2 en position R comme dans le cas de la figure 1, la résistance R1 de la figure 2 devient alors visible dans le chemin de courant relatif à la première batterie 10.

Selon les cas, la résistance série R1 peut avoir une résistance de l'ordre de 5 à 10 milliohms.

Cette valeur peut être constituée par une résistance discrète (figure 2), qui dans un mode de réalisation coopère avec un fusible comme un fusible ou un commutateur réarmable, ou, ainsi qu'il est représenté à la figure 3, par une résistance répartie comme celle d'un câble de liaison C1 entre la position R et le point commun D entre l'interrupteur K1 et la première batterie 11.

Dans la disposition de la figure 3, le réseau électrique peut être constitué autour d'une première batterie 10 disposée par exemple à l'arrière du véhicule, et d'une seconde batterie 11 disposé sous le capot moteur à l'avant du véhicule.

La résistance du câble C1 est contrôlée par sa section, sa longueur et, le cas échéant, par sa matière ainsi que par son mode de constitution, par exemple en brins torsadés.

Un câble en aluminium peut être une solution avantageuse grâce à sa légèreté et à son coût inférieur à celui du cuivre, sa résistivité supérieure permettant d'atteindre plus facilement l'objectif de résistance recherchée de 5 à 10 milliohms pour un véhicule automobile habituel.

Particulièrement dans le cas précité où les deux batteries ne se trouvent pas dans le même compartiment du véhicule, les deux batteries peuvent se trouver à des températures de fonctionnement différentes l'une de l'autre, alors qu'elles sont soumises à la recherche unique de l'alterno-démarreur.

Dans ce cas particulier, la batterie 10 se trouve en général à une température inférieure à celle de la batterie 11 disposée dans le compartiment moteur qui est généralement plus chaud.

La tension optimale de recharge de la batterie 10 disposée dans le compartiment arrière du véhicule plus froid, sera donc supérieure à celle de la batterie 11 disposée dans le compartiment moteur thermique plus chaud.

Afin de ne pas surcharger la batterie 11 du compartiment moteur, on travaillera usuellement à la tension de charge de cette batterie.

Il en résulte alors que la recharge de la batterie 10 dans le compartiment plus froid posera un problème de recharge et en ce qu'il faudra pouvoir déconnecter, le cas échéant, la batterie 10 et/ou la batterie 11 de l'alternateur et du réseau 5 de bord.

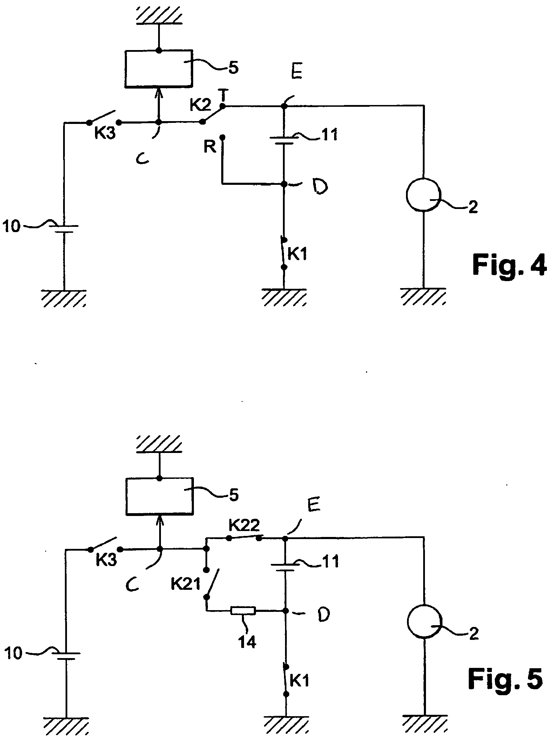

A cet effet, à la figure 4, un second mode de réalisation de l'invention est représenté dans lequel on a ajouté un interrupteur K3 supplémentaire disposé entre le point commun C du commutateur K2 et du réseau de bord 5 et la seconde polarité (la borne positive) de la batterie 10.

Selon le schéma d'activation des interrupteurs K1 et K3, soit la batterie 10, soit la batterie 11, soit les deux batteries 10 et 11 peuvent être connectées au réseau de bord 5.

De cette façon, il est possible de recharger indépendamment les batteries 10 et 11 sans perturber le réseau de bord 5.

Il est bien entendu que si les batteries 11 et 10 sont toujours à la même température, l'interrupteur K3 n'est pas réellement utile.

Son utilisation dépend donc de l'architecture du réseau de bord retenu dans le véhicule.

De manière typique, les interrupteurs, ou relais, ou commutateurs K1, K2 et K3 des figures 1 à 4 précitées peuvent être réalisés sous toutes les formes évoquées à savoir du type électromécanique ou du type statique faisant intervenir par exemple des transistors du type MOSFET, chaque transistor étant constitué avantageusement à partir de transistors montés en parallèle.

Avantageusement l'unité de commutation comprenant au moins l'interrupteur K1 et le commutateur K2 appartiennent à un autre module de puissance distinct de celui comprenant le pont de redressement et l'onduleur. Ce module intègre également de manière avantageuse l'interrupteur K3.

Ce module est piloté par l'unité de commande et de contrôle de l'alterno-démarreur.

Les fonctions relais K1; K2, K3 des figures 1 à 4 se distinguent de la façon suivante.

Le relais K1 est un relais simple contact dont le courant maximum est, pour un véhicule automobile classique, de l'ordre de 150 ampères.

Le commutateur K2 est un relais double contact, travail/repos (T/R) et voit un courant, qui est courant de démarrage en position R pouvant être supérieur à 600A, et en T, un courant maximum de 150 ampères, comme l'interrupteur K1.

L'interrupteur K3 est une relais simple contact qui voit le courant de démarrage ou un courant maximum de 150 ampères en mode alternateur.

Les relais K1 à K3 sont donc des relais de puissance.

Dans un souci de standardisation, il peut être avantageux de remplacer le relais double contact K2 par deux relais identiques, tels que des interrupteurs, à simple contact.

Dans ce cas selon un troisième mode de réalisation de l'invention, on prévoit deux interrupteurs K2.2 et K2.1 qui sont connectés ainsi qu'il a été représenté à la figure 5.

A la figure 5, l'interrupteur K2.1 est disposé entre le point commun du réseau de bord 5 et de l'interrupteur K3, d'une part, éventuellement son autre borne est connectée à un élément résistif 14 qui est connecté en série avec le point commun de l'interrupteur K1 et une borne de la batterie 11.

Le second interrupteur K2.2 du commutateur K2 est connecté entre le point commun avec le réseau de bord 5 et l'interrupteur précité K2.1, et l'autre borne de la batterie 11.

Dans ce mode de réalisation, les interrupteurs K1 et K2.2 sont des relais standards de courant maximum de 150 ampères pour un véhicule automobile classique.

Les interrupteurs K2.1 et K3 sont des relais de puissance qui voient le courant de démarrage qui peut être supérieur à 600 ampères.

Dans toutes ces configurations, comme indiqué à la figure 5, on peut ajouter un fusible ou tout élément de déconnexion comme un fusible réarmable, placé dans le bras de connexion en série des deux batteries 10 et 11 comme un élément 14 placé entre le point D et le l'interrupteur K21.

L'interrupteur K2.1 est préférentiellement réalisé sous la forme d'un interrupteur électronique.

Les commutations des différents interrupteurs ou commutateurs des modes de réalisation des figures 1 à 5 sont contrôlées en fonction du courant de coupure afin de rechercher une commutation à faible courant, ou même à courant nul.

Les commutations des interrupteurs K1, K2 et/ou K3 sont pilotés par le module électronique de commande et de contrôle de l'alterno-démarreur en fonction du mode de fonctionnement de l'unité électromécanique 2.

Dans d'autres modes de réalisation, non représentés aux dessins, des charges additionnelles sont connectées au potentiel débité par l'alterno-démarreur 2, comme un potentiel de 24 volts, alors que le réseau de bord reste lui sous 12 volts.

Dans ce cas, le différentiel de tension disponible est absorbé par ces charges additionnelles de sorte que le circuit de l'invention n'est pas modifié.

Avantageusement il est prévu des moyens de sécurité pour éviter que dans la position de la figure 1, position de montage en série des batteries, l'interrupteur K1 soit fermé ce qui provoquerai un court-circuit.

Ces moyens de sécurité dans un mode de réalisation sont du type électronique.

En variante ces moyens sont du type électromécanique comme visible par exemple dans le mode de réalisation des figures 6 à 11.

Dans ces figures 6 à 11 les moyens de sécurité 100 sont intégrés à l'unité de commutation K1, K2 en sorte qu'il est formé une unité de commutation sécurisée.

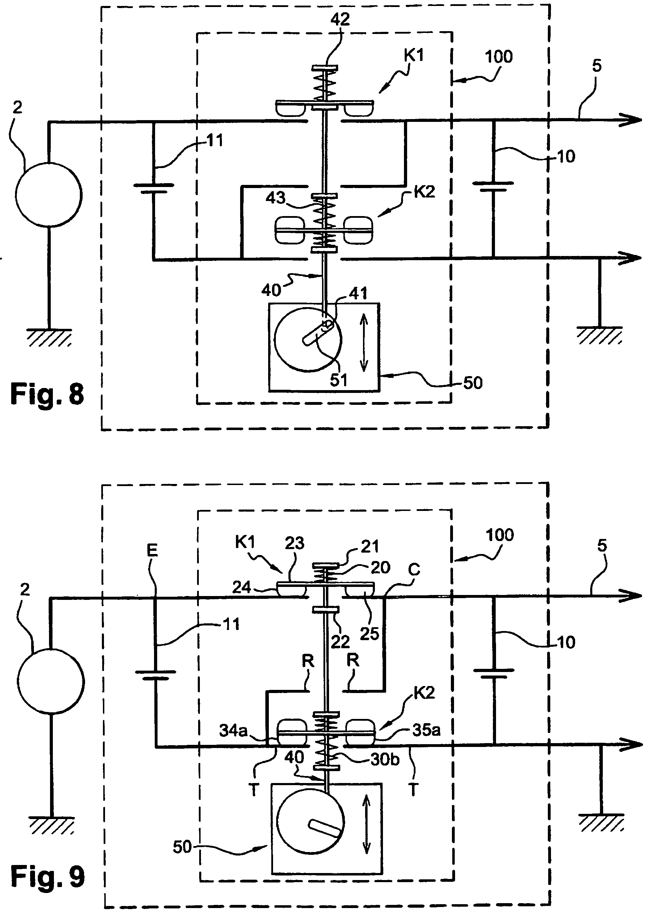

Dans les figures identiques 6 et 11 l'unité de commutation K1, K2 est dans le même état de fonctionnement qu'a la figure 1, les deux batteries 10 et 11 étant connectées en série, l'alterno-démarreur 2 fonctionnant en mode moteur électrique pour notamment démarrer le moteur thermique du véhicule automobile. Dans la figure 9 l'unité de commutation est dans le même état de fonctionnement qu'a la figure 2, les deux batteries 10 et 11 étant connectées en parallèle, l'alterno-démarreur 2 fonctionnant en mode générateur électrique.

Les figures 7 et 8 illustrent deux phases successives de transition pour passer de l'état de la figure 6 à l'état de la figure 9.

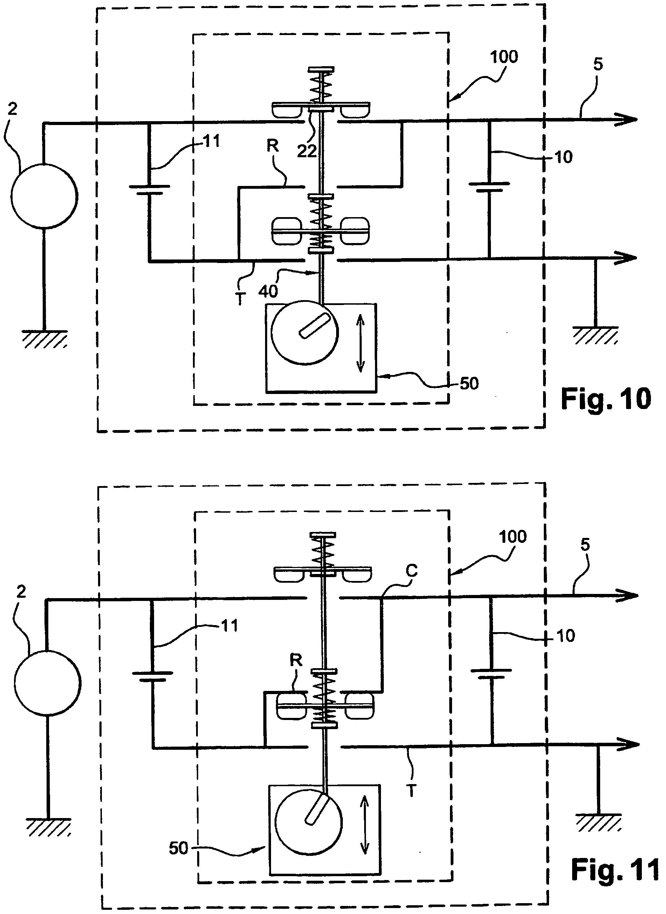

La figure 10 illustre une phase de transition pour passer de l'état de la figure 9 à l'état de la figure 11 identique à celui de la figure 6.

Les figures 7, 8 et 10 illustrent le fait que l'interrupteur K1 ne peut jamais être fermé lorsque les deux batteries 10, 11 sont en série.

Dans ces figures les moyens de sécurité 100 comportent un actionneur 50 destiné à entraîner à translation une tige de commande 40, qui porte deux contacts mobiles 23, 33 appartenants respectivement à l'interrupteur K1 et au commutateur K2, le contact 23 étant implanté au dessus du contact 33 dans ces figures 6 à 11.

L'actionneur 50 comporte des moyens moteurs, par exemple un moteur électrique dans le mode de réalisation des figures 6 à 11. Le contour schématique du moteur électrique est référencé en 52 à la figure 6.

Ces moyens moteurs 52 comprennent un arbre de sortie ici mobile en rotation lorsque les moyens moteurs sont activés, c'est-à-dire alimentés électriquement dans l'exemple de réalisation représenté.

L'activation des moyens moteurs est avantageusement pilotée par le module de commande et contrôle de l'alterno-démarreur, qui par exemple comporte un driver pour piloter les moyens moteurs 52.

Un dispositif de transmission de mouvement 51 intervient entre l'arbre de sortie des moyens moteurs 52 et la tige de commande 40 pour animer celle-ci d'un mouvement de va et vient en translation. c'est à dire pour transformer un mouvement circulaire en un mouvement globalement rectiligne et alternatif.

Dans le mode de réalisation des figures 6 à 11 le dispositif 51, représenté schématiquement, est du type bielle manivelle.

En variante on peut utiliser un dispositif de transmission de mouvement à excentrique, ou à roue dentée et crémaillère, ou tout autre dispositif réversible dans le quel par exemple l'arbre de sortie des moyens moteurs entraîne un organe mobile en rotation et fixe en translation, tel qu'une vis, venant en prise avec un deuxième organe mobile en translation et fixe en rotation, cet organe, tel qu'un écrou, étant solidaire de la tige.

En variante les moyens moteurs 52 sont du type électromagnétique et comportent un électroaimant comme les contacteurs de démarreur.

Par exemple le déplacement de la tige de commande 40 est piloté par le noyau mobile d'un électroaimant comportant au moins une bobine d'excitation fixe et un noyau fixe. De manière connue, lorsque la bobine est alimentée électriquement il est formé un champ électromagnétique en sorte que le noyau mobile pénètre à l'intérieur de la bobine et se déplace en direction du noyau fixe, de préférence en matière ferromagnétique.

Par exemple le noyau mobile, destiné à pénétrer à l'intérieur de la bobine, est relié de manière coaxiale à la tige, pour actionner l'extrémité inférieure ou supérieure de la tige de commande.

Dans un autre mode de réalisation l'électroaimant est implanté parallèlement à la tige et agit sur l'extrémité supérieure d'un premier levier comportant une partie intermédiaire montée à articulation sur une partie fixe et une extrémité inférieure en forme de fourchette engagée dans une gorge d'une des extrémités de la tige de commande pour déplacer ladite extrémité, par exemple l'extrémité inférieure ou supérieure de la tige.

Dans encore un autre mode de réalisation l'électroaimant s'étend perpendiculairement à la tige de commande, par exemple au-dessus de l'extrémité supérieure de la tige et est relié à l'extrémité inférieure de la tige via un mécanisme de renvoi comportant le premier levier précité, dont l'extrémité inférieure en forme de fourchette est engagée dans une gorge de l'extrémité inférieure de la tige de commande, un deuxième levier articulé comportant des bras de levier et une tige intercalée entre les leviers comme décrit par exemple dans le document FR A 2 843 427.

Dans un mode de réalisation la bobine est reliée électriquement à une partie de commande et de contrôle appartenant de manière précitée à l'unité de commande et de contrôle de l'alterno-démarreur.

Dans un autre mode de réalisation la partie de commande et de contrôle appartient à une autre unité de commande et de contrôle du véhicule automobile.

Dans la position R de repos (figure 6) la bobine n'est pas alimentée électriquement ou les moyens moteurs 52 ne sont pas activés, tandis que dans la position T de travail (figure 9) la bobine est alimentée électriquement ou les moyens moteurs sont activés.

Les contacts mobiles 23, 33 sont ici en forme de plaquette électriquement conductrice, par exemple en cuivre. Ces contacts s'étendent perpendiculairement à la tige 40.

Chaque contact mobile 23, 33 est par exemple en forme plaquette de forme rectangulaire, circulaire ou polygonale et est monté mobile par rapport à la tige 40.

Chaque contact 23,33 est percé centralement pour passage de la tige de commande 40 et son montage coulissant par rapport à la tige 40.

La tige porte des épaulements 21, 22 - 31,32 pour limiter le déplacement des contacts mobiles 23, 33, ainsi que des ressorts 20 - 30a, 30b, qui autorisent une liberté de mouvement transversale des contacts 23, 33 par rapport à la tige. Ces épaulements, formants des butées, et ces ressorts appartiennent aux moyens de sécurité 100.

Les ressorts 20 - 30a, 30b sont creux pour passage de la tige 40 et consistent ici en des ressorts à boudin. Bien entendu tour autre forme de réalisation est envisageable. Par exemple on peut utiliser comme ressort un montage de une ou plusieurs rondelles Belleville et/ou des ressorts en caoutchouc.

Plus précisément (figure 8) la tige 40 présente une extrémité inférieure 41 attelée au dispositif 51, une extrémité supérieure 42 constituant l'extrémité libre de la tige et une partie intermédiaire 43.

L'extrémité libre 42 (figure 6) porte un premier épaulement supérieure 21 et un deuxième épaulement 22 implanté en dessous du premier épaulement 21.

Un seul ressort 20, ici à boudin, est prévu pour le contact mobile 23 de l'interrupteur K1. Ce ressort 20 prend appui sur la face inférieure du premier épaulement 21 et sur la face supérieure du contact mobile 23. Il sollicite donc le contact mobile 23 en direction du deuxième épaulement 22.

Dans la figure 6 le contact 23 est, par sa face inférieure, en appui sur la face supérieure de l'épaulement 22 sous l'action du ressort 20 avantageusement monté avec précontrainte, tandis qu'à la figure 9 le contact 23 est à distance de l'épaulement 22. Le ressort 20 est dans son état de compression maximal à la figure 9, sa compression augmentant lors du passage de la tige 40 de l'état de la figure 6 (état de compression minimal) à l'état de la figure 9 (voir figures 7 et 8).

Deux ressorts 30a, 30b, ici du type ressort à boudin, sont montés sur la partie intermédiaire 43 de la tige 40, qui porte deux un troisième épaulement 31, implanté en dessous du deuxième épaulement 22 à distance de celui-ci, et un quatrième épaulement 32 implanté en dessous du troisième épaulement 31 en sorte que les ressorts 30a, 30b soient montés avec précontrainte, c'est-à-dire comprimés, entre les épaulements 31, 32.

Les ressorts 30a, 30b sont montés en opposition de part et d'autre du contact mobile 33 l'un se comprimant, tandis que l'autre se détend jusqu'à l'équilibre lors du mouvement de la tige comme visible dans les figures 6 à 11.

Le ressort 30a prend appui sur la face inférieure du troisième épaulement 31 et sur la face supérieure du contact mobile 33. Le ressort 30b prend appui sur la face inférieure du contact mobile 33 et sur la face supérieure du quatrième épaulement. Avantageusement les ressorts 30a, 30b sont identiques et ont donc la même raideur. Avantageusement le ressort 20 est identique aux ressorts 30a, 30b

Dans l'état de la figure 6 le ressort 30b est dans son état de compression maximal et est dans son état de compression minimal dans la figure 9. L'inverse se produit pour le ressort 30a qui est dans son état de compression maximal à la figure 9.

Les épaulements 21, 22 - 31, 32, formant des butées pour les ressorts concernés, sont avantageusement rapportés par tous moyens, de préférence de manière démontable, sur la tige 40 et consistent par exemple en des rondelles. La distance entre les épaulements, en particulier entre le deuxième et le troisième épaulements dépend des applications pour éviter que dans la position de la figure 6, l'interrupteur K1 soit fermé.

Les contacts mobiles 23, 33 portent chacun ici au moins deux saillies, tels que des renflements obtenus par emboutissage du contact, des bossages ou des plots rapportés pour formation de contacts destinés à venir en contact avec des contacts fixes que présente les moyens de sécurité 100.

Ces contacts fixes sont formés par exemple à l'aide de pistes électriquement conductrices fixes, avantageusement sous la forme d'un circuit métallique prédécoupé, traversées par la tige à la faveur d'un passage de sorte qu'il est formé sur les bords de chaque passage deux contacts fixes, chaque piste étant formée à la faveur de deux portions séparées l'une de l'autre par le passage.

En variante le contact fixe est continu et est formé à la faveur d'un trou réalisé dans la piste concernée.

On peut inverser les structures en sorte qu'en variante les saillies sont portées par les pistes fixes électriquement conductrices.

Les pistes sont rapportées avantageusement sur un support isolant doté de passages pour la tige 40 de la même manière que les pistes.

Les passages peuvent avoir un contour rectangulaire, polygonal ou avantageusement circulaire comme dans les figures 6 à 11.

Les saillies ont avantageusement une forme arrondie, comme visible dans les figures 6 à 11 pour contact local avec la partie fixe ou mobile concernée.

Dans ces figures la face inférieure du contact mobile 23 porte deux plots 24, 25 diamétralement opposés pour établir dans la position de la figure 9, une liaison électrique entre l'alterno-démarreur 2 fonctionnant en générateur électrique et le réseau de bord 5 en sorte que les deux batteries sont connectées électriquement en parallèle.

Dans ces figures le contact mobile 33 porte deux paires de plots, à savoir une première paire de plots 34a, 35a portés par la face inférieure du contact mobile 33 et une deuxième paire de plots 34b, 35b portés par la face supérieure du contact mobile 33.

La configuration de ce mode de réalisation est avantageuse car elle fait appel à une solution dans laquelle le commutateur K2 est remplacé par deux relais identiques comme dans le mode de réalisation de la figure 5.

En outre cette solution fait appel à une solution économique à trois interrupteurs alignés et deux contacts mobiles.

Dans la figure 6 le contact mobile 33, via ses saillies 34b, 35b supérieures, par coopération avec ses contacts fixes associés réalise la position ou état R de repos.

Dans la figure 9 le contact mobile 33, via ses saillies 34a, 35a inférieures, par coopération avec ses contacts fixes associés réalise la position ou état T de travail.

L'interrupteur K1 avec ses contacts fixes est implanté au dessus des contacts fixes déterminant la position R, qui sont eux-mêmes implantés au-dessus des contacts fixes déterminant la position T. Autrement dit le commutateur comporte un interrupteur semblable à l'interrupteur K21 de la figure 5, implanté au-dessus d'un interrupteur semblable à l'interrupteur K22 de la figure 5.

Ainsi il est prévu trois interrupteurs échelonnés par rapport à l'axe de la tige.

On peut utiliser comme moyen moteur un moteur électrique de faible puissance.

Cette solution est plus économique qui consisterai à remplacer l'interrupteur K1 et le commutateur K2 par une solution électronique à circuit intégré faisant appel par exemple à des transistors du type MOSFET. Pour le commutateur on utiliserait avantageusement deux transistors du type MOSFET montés tête bêche.

On notera que dans les figures 6 à 11 on a inversé les implantations de l'interrupteur et du commutateur par rapport au mode de réalisation des figures 1 et 2.

En effet l'interrupteur K1 est connecté entre la polarité de plus fort potentiel et donc de plus forte tension du réseau de bord et la borne de plus forte tension de la deuxième unité de conversion électrochimique, tandis que le commutateur est connecté entre le deuxième polarité de plus faible tension du réseau de bord et la borne de plus faible tension de la première unité de conversion électrochimique.

Autrement dit l'interrupteur K1 dans la position de la figure 9 établit une liaison électrique entre le point C, qui est au potentiel positif de la première batterie 10 et du réseau 5, et le point E, qui est au potentiel positif de la deuxième batterie et de l'alternateur 11 (deuxième borne), tandis que le commutateur K2 est dans sa position de travail T et relie entre elles les bornes négatives des batteries 10,11.

Dans la position R (figure 6 et 11), le commutateur K2 relie électriquement la borne négative de la deuxième batterie au point C.

Bien entendu la présente invention n'est pas limitée aux exemples de réalisation décrits mais englobe toutes les combinaisons. Dans les figures 6 à 11 on peut inverser la position du commutateur et de' l'interrupteur pour arriver à une disposition de la figure 5.

On peut scinder l'unité de commutation de la figure 6 en deux ce qui revient à doubler le nombre de moyens moteurs.

Dans la figure 12 le dispositif électromagnétique 2 comporte de manière précitée un alternateur A et un démarreur S montés de manière adjacente. L'alternateur et le démarreur constituent une unité électromécanique et sont montés en parallèle en étant connectés par une première borne à la masse et par une seconde borne à la seconde polarité du réseau de bord 5 via l'interrupteur K1.

Le reste du circuit est semblable à celui des figures 6 à 11, le commutateur K2 étant dans la position des figures 6 et 11

En variante l'alternateur A est déporté par rapport au démarreur S comme visible à la figure 13 en étant monté en parallèle par rapport à la batterie 10. L'alternateur A peut donc être un alternateur classique. Le dispositif électromagnétique ne constitue pas dans ce cas une unité électromagnétique.

Dans les figures 12 et 13 en phase de démarrage le démarreur S fonctionne sous une tension de 24V.

La résistance R1 peut être connecté à la borne négative de la batterie 11 et à la seconde polarité du réseau de bord 5 via le commutateur K2 lorsque celui-ci est dans sa première position R comme visible à la figure 13. La résistance R1 de cette figure 13 peut être remplacé par le câble C1 de la figure 3 ou le fusible 14 de la figure 5. Toutes les combinaisons sont donc envisageables. Il est donc prévu dans la figure 13 des moyens de limitation pour limiter le courant dans le moteur électrique du démarreur S lorsque celui-ci fonctionne c'est-à-dire lorsque celui-ci fonctionne en mode moteur électrique. Cela peut s'appliquer à la figure 12.

## Revendications

1. Système de démarrage et de génération électrique pour coopérer avec le réseau de bord bipolaire (5) d'un véhicule automobile à moteur thermique comportant :
- un dispositif électromécanique (2) permettant les fonctions combinées de production d'électricité -fonctionnement en mode générateur électrique- et de production de puissance mécanique - fonctionnement en mode moteur électrique-, notamment pour démarrer le moteur thermique, comprenant deux bornes de polarité différente ;
- une première (10) et une seconde (11) unités de conversion électrochimique distinctes, comme des batteries électrochimiques, comprenant deux bornes de polarité différente;
- une unité de commutation (K1, K2, K3) destinée à connecter l'une ou l'autre des batteries sur le réseau de bord (5),
ladite unité de commutation comporte :
- un interrupteur (K1) destiné à être connecté entre une première polarité du réseau de bord (5) et une première borne de la seconde unité électrochimique (11);
- un commutateur (K2) destiné à être connecté à une seconde borne de la première unité de conversion électrochimique (10) portée à une seconde polarité et sur le réseau de bord (5) et dont une première position (T) est reliée à la fois à une deuxième borne du dispositif électromécanique (2) et à une deuxième borne de la seconde unité électrochimique (11) et dont une seconde position (R) est reliée au point commun (D) entre une seconde borne de l'interrupteur (K1) et de la première borne de la deuxième unité de conversion électrochimique (11) ;
**caractérisé en ce que** le réseau de bord (5) est connecté aux bornes de la première unité de conversion électrochimique (10), et **en ce que** pour permettre le fonctionnement des deux unités électrochimiques (10, 11) à des températures de fonctionnement différentes, notamment lors de la recharge de l'une d'entre elles, ledit système comporte un interrupteur supplémentaire (K3) inséré entre la deuxième borne à une seconde polarité de la première unité électrochimique (10) et le point commun entre le commutateur (K2) et le réseau de bord (5).

2. Système selon la revendication 1, **caractérisé en ce que** le dispositif électromécanique consiste en une unité électromécanique comportant un alterno-démarreur fonctionnant ou bien comme alternateur -mode générateur électrique- pour charger le réseau de bord (5) et les deux unité (10,11) de conversion électrochimique ou bien comme moteur électrique, notamment comme démarreur pour réaliser le démarrage du moteur thermique du véhicule automobile - mode moteur électrique-, **en ce que** l'alterno-démarreur comporte un pont formant un onduleur lorsque l'alterno-démarreur fonctionne en mode moteur électrique, et **en ce qu'**il est prévu des moyens de limitation pour limiter le courant dans l'onduleur lorsque l'alterno-démarreur fonctionne en mode moteur électrique.

3. Système selon la revendication 1, **caractérisé en ce que** le dispositif électromécanique comporte un démarreur (S) et **en ce qu'**il est prévu des moyens de limitation pour limiter le courant dans le démarreur lorsque celui-ci fonctionne en mode moteur électrique.

4. Système selon la revendication 2 ou 3, **caractérisé en ce que** les moyens de limitation consistent en une résistance supplémentaire de faible valeur comprise entre 5 et 10 milliohms et insérée sur le chemin entre la seconde position (R) du commutateur (K2) et le point commun entre la deuxième borne de l'interrupteur (K1) et la première borne de la deuxième unité électrochimique (11).

5. Système selon la revendication 2 ou 3, **caractérisé en ce que** les moyens de limitation consistent en une résistance répartie, tel qu'un câble C1.

6. Système selon la revendication 2 ou 3, **caractérisé en ce que** les unités électrochimiques présentent une résistance interne de faible valeur inférieure à 1 Ohm pour formation des moyens de limitation.

7. Système selon l'une quelconque des revendications précédentes, **caractérisé en ce qu'**il comporte un moyen pour fermer l'interrupteur (K1) puis pour placer le commutateur (K2) en seconde position (R) de sorte que, pour augmenter la tension appliquée, notamment pour un fonctionnement en mode moteur électrique, le dispositif électromécanique (2) est connecté en série avec les deux unités électrochimiques (10, 11), et pour permettre un fonctionnement en mode générateur électrique, en recharge de la première unité électrochimique (10).

8. Système selon l'une quelconque des revendications précédentes, **caractérisé en ce qu'**il comporte un moyen pour placer le commutateur (K2) en première position (T), puis pour fermer l'interrupteur (K1).

9. Système selon l'une quelconque des revendications précédentes, **caractérisé en ce qu'**il comporte des moyens de sécurité (100) pour, lorsque le dispositif électromécanique fonctionne en mode moteur électrique, éviter que l'interrupteur (K1) soit fermé lorsque le commutateur (K2) est dans la deuxième position (R).

10. Système selon la revendication 9, **caractérisé en ce que** les moyens de sécurité comportent un actionneur (50) destiné à entraîner une tige de commande (40), qui porte des contacts mobiles (23, 33) appartenants respectivement à l'interrupteur (K1) et au commutateur (K2).

11. Système selon la revendication 10, **caractérisé en ce que** la tige de commande (14) porte des épaulements pour limiter le déplacement des contacts mobiles (22, 23).

12. Système selon la revendication 11, **caractérisé en ce qu'**un ressort (20) prend appui sur la face d'un premier épaulement (21) et sur la face supérieure du contact mobile (23) de l'interrupteur (K1) pour solliciter ledit contact mobile en direction d'un second épaulement.

13. Système selon la revendication 12, **caractérisé en ce que** deux ressorts (30a, 30b) sont montés comprimés entre un troisième épaulement (31) implanté en dessous du second épaulement (21), et un quatrième épaulement implanté en dessous du troisième épaulement (31) et **en ce que** les deux ressorts sont montés en opposition de part et d'autre du contact mobile (33) du commutateur (K2).

14. Système selon l'une quelconque des revendications précédentes, **caractérisé en ce que** l'interrupteur (K1) est destiné à être connecté entre la polarité de plus faible potentiel et donc de plus faible tension du réseau de bord (5) et la borne de plus faible tension de la deuxième unité de conversion électrochimique (11), tandis que le commutateur (K2) est destiné à être connecté entre le deuxième polarité de plus forte tension du réseau de bord (5) et la borne de plus forte tension de la première unité de conversion électrochimique (10).

15. Système selon l'une quelconque des revendications 1 à 14, **caractérisé en ce que** l'interrupteur (K1) est destiné à être connecté entre la polarité de plus fort potentiel et donc de plus forte tension du réseau de bord (5) et la borne de plus forte tension de la deuxième unité de conversion électrochimique (11), tandis que le commutateur (K2) est destiné à être connecté entre le deuxième polarité de plus faible tension du réseau de bord (5) et la borne de plus faible tension de la première unité de conversion électrochimique (10).

## Patentansprüche

1. Start- und Elektrizitätserzeugungssystem zur Zusammenwirkung mit dem zweipoligen Bordnetz (5) eines Kraftfahrzeugs mit Verbrennungsmotor, das aufweist:
- eine elektromechanische Vorrichtung (2), die die kombinierten Funktionen der Erzeugung von Elektrizität - Betrieb im Modus elektrischer Generator - und der Erzeugung mechanischer Leistung - Betrieb im Modus Elektromotor - erlaubt, insbesondere um den Verbrennungsmotor zu starten, die zwei Klemmen unterschiedlicher Polarität enthält;
- getrennte erste (10) und zweite (11) elektrochemische Umwandlungseinheiten, wie elektrochemische Batterien, die zwei Klemmen unterschiedlicher Polarität enthalten;
- eine Schalteinheit (K1, K2, K3), die dazu bestimmt ist, die eine oder die andere der Batterien an das Bordnetz (5) anzuschließen,
die Schalteinheit weist auf:
- einen Unterbrecher (K1), der dazu bestimmt ist, zwischen einer ersten Polarität des Bordnetzes (5) und einer ersten Klemme der zweiten elektrochemischen Einheit (11) angeschlossen zu werden;
- einen Schalter (K2), der dazu bestimmt ist, an eine zweite Klemme der ersten elektrochemischen Umwandlungseinheit (10), die auf eine zweite Polarität gebracht wird, und an das Bordnetz (5) angeschlossen zu werden, und von dem eine erste Stellung (T) sowohl mit einer zweiten Klemme der elektromechanischen Vorrichtung (2) als auch mit einer zweiten Klemme der zweiten elektrochemischen Einheit (11) verbunden ist, und von dem eine zweite Stellung (R) mit dem gemeinsamen Punkt (D) zwischen einer zweiten Klemme des Unterbrechers (K1) und der ersten Klemme der zweiten elektrochemischen Umwandlungseinheit (11) verbunden ist;
**dadurch gekennzeichnet, dass** das Bordnetz (5) an die Klemmen der ersten elektrochemischen Umwandlungseinheit (10) angeschlossen ist, und dass, um den Betrieb der zwei elektrochemischen Einheiten (10, 11) bei unterschiedlichen Betriebstemperaturen zu erlauben, insbesondere beim Aufladen einer von ihnen, das System einen zusätzlichen Unterbrecher (K3) aufweist, der zwischen die zweite Klemme mit einer zweiten Polarität der ersten elektrochemischen Einheit (10) und den gemeinsamen Punkt zwischen dem Schalter (K2) und dem Bordnetz (5) eingefügt ist.

2. System nach Anspruch 1, **dadurch gekennzeichnet, dass** die elektromechanische Vorrichtung aus einer elektromechanischen Einheit besteht, die einen Starter-Generator aufweist, der entweder als Wechselstromgenerator - Modus elektrischer Generator - , um das Bordnetz (5) und die zwei elektrochemischen Umwandlungseinheiten (10, 11) zu laden, oder als Elektromotor arbeitet, insbesondere als Starter, um den Start des Verbrennungsmotors des Fahrzeugs durchzuführen - Modus Elektromotor -, dass der Starter-Generator eine Brücke aufweist, die einen Wechselrichter bildet, wenn der Starter-Generator im Modus Elektromotor arbeitet, und dass Begrenzungseinrichtungen vorgesehen sind, um den Strom im Wechselrichter zu begrenzen, wenn der Starter-Generator im Modus Elektromotor arbeitet.

3. System nach Anspruch 1, **dadurch gekennzeichnet, dass** die elektromechanische Vorrichtung einen Starter (S) aufweist, und dass Begrenzungseinrichtungen vorgesehen sind, um den Strom im Starter zu begrenzen, wenn dieser im Modus Elektromotor arbeitet.

4. System nach Anspruch 2 oder 3, **dadurch gekennzeichnet, dass** die Begrenzungseinrichtungen aus einem zusätzlichen Widerstand geringen Werts zwischen 5 und 10 Milliohm und auf dem Weg zwischen der zweiten Stellung (R) des Schalters (K2) und dem gemeinsamen Punkt zwischen der zweiten Klemme des Unterbrechers (K1) und der ersten Klemme der zweiten elektrochemischen Einheit (11) eingefügt bestehen.

5. System nach Anspruch 2 oder 3, **dadurch gekennzeichnet, dass** die Begrenzungseinrichtungen aus einem verteilten Widerstand wie einem Kabel C1 bestehen.

6. System nach Anspruch 2 oder 3, **dadurch gekennzeichnet, dass** die elektrochemischen Einheiten einen inneren Widerstand geringen Werts niedriger als 1 Ohm zur Bildung der Begrenzungseinrichtungen aufweisen.

7. System nach einem der vorhergehenden Ansprüche, **dadurch gekennzeichnet, dass** es eine Einrichtung aufweist, um den Unterbrecher (K1) zu schließen und dann den Schalter (K2) in die zweite Stellung (R) zu bringen, damit, um die angelegte Spannung zu erhöhen, insbesondere für einen Betrieb im Modus Elektromotor, die elektromechanische Vorrichtung (2) mit den zwei elektrochemischen Einheiten (10, 11) in Reihe geschaltet wird, und um beim Nachladen der ersten elektrochemischen Einheit (10) einen Betrieb im Modus elektrischer Generator zu erlauben.

8. System nach einem der vorhergehenden Ansprüche, **dadurch gekennzeichnet, dass** es eine Einrichtung aufweist, um den Schalter (K2) in die erste Stellung (T) zu bringen und dann den Unterbrecher (K1) zu schließen.

9. System nach einem der vorhergehenden Ansprüche, **dadurch gekennzeichnet, dass** es Sicherheitseinrichtungen (100) aufweist, um, wenn die elektromechanische Vorrichtung im Modus Elektromotor arbeitet, zu vermeiden, dass der Unterbrecher (K1) geschlossen ist, wenn der Schalter (K2) in der zweiten Stellung (R) ist.

10. System nach Anspruch 9, **dadurch gekennzeichnet, dass** die Sicherheitseinrichtungen einen Stellantrieb (50) aufweisen, der dazu bestimmt ist, eine Steuerstange (40) anzutreiben, die bewegliche Kontakte (23, 33) trägt, die zum Unterbrecher (K1) bzw. zum Schalter (K2) gehören.

11. System nach Anspruch 10, **dadurch gekennzeichnet, dass** die Steuerstange (14) Schultern trägt, um die Verschiebung der beweglichen Kontakte (22, 23) zu begrenzen.

12. System nach Anspruch 11, **dadurch gekennzeichnet, dass** eine Feder (20) auf der Seite einer ersten Schulter (21) und auf der Oberseite des beweglichen Kontakts (23) des Unterbrechers (K1) aufliegt, um den beweglichen Kontakt in Richtung einer zweiten Schulter zu beaufschlagen.

13. System nach Anspruch 12, **dadurch gekennzeichnet, dass** zwei Federn (30a, 30b) zwischen einer unter der zweiten Schulter (21) eingebauten dritten Schulter (31) und einer unter der dritten Schulter (31) eingebauten vierten Schulter komprimiert montiert sind, und dass die zwei Federn zu beiden Seiten des beweglichen Kontakts (33) des Schalters (K2) entgegengesetzt montiert sind.

14. System nach einem der vorhergehenden Ansprüche, **dadurch gekennzeichnet, dass** der Unterbrecher (K1) dazu bestimmt ist, zwischen der Polarität geringsten Potentials und folglich geringster Spannung des Bordnetzes (5) und der Klemme geringster Spannung der zweiten elektrochemischen Umwandlungseinheit (11) angeschlossen zu werden, während der Schalter (K2) dazu bestimmt ist, zwischen der zweiten Polarität höchster Spannung des Bordnetzes (5) und der Klemme höchster Spannung der ersten elektrochemischen Umwandlungseinheit (10) angeschlossen zu werden.

15. System nach einem der Ansprüche 1 bis 14, **dadurch gekennzeichnet, dass** der Unterbrecher (K1) dazu bestimmt ist, zwischen der Polarität höchsten Potentials und somit höchster Spannung des Bordnetzes (5) und der Klemme höchster Spannung der zweiten elektrochemischen Umwandlungseinheit (11) angeschlossen zu werden, während der Schalter (K2) dazu bestimmt ist, zwischen der zweiten Polarität geringster Spannung des Bordnetzes (5) und der Klemme geringster Spannung der ersten elektrochemischen Umwandlungseinheit (10) angeschlossen zu werden.

## Claims

1. Starting and electrical generation system for cooperating with the bipolar onboard network (5) of a motor vehicle with heat engine comprising:
- an electromechanical device (2) allowing for the combined functions of electricity production - operation in electrical generator mode - and of mechanical power production - operation in electric motor mode - notably for starting the heat engine, comprising two terminals of different polarity;
- a first (10) and a second (11) distinct electrochemical conversion units, such as electrochemical batteries, comprising two terminals of different polarity;
- a switching unit (K1, K2, K3) intended to connect one or other of the batteries to the onboard network (5),
- said switching unit comprising:
- a switch (K1) intended to be connected between a first polarity of the onboard network (5) and a first terminal of the second electrochemical unit (11);
- a changeover switch (K2) intended to be connected to a second terminal of the first electrochemical conversion unit (10) brought to a second polarity and on the onboard network (5) and a first position (T) of which is linked both to a second terminal of the electromechanical device (2) and to a second terminal of the second electrochemical unit (11) and a second position (R) of which is linked to the common point (D) between a second terminal of the switch (K1) and the first terminal of the second electrochemical conversion unit (11);
**characterized in that** the onboard network (5) is connected to the terminals of the first electrochemical conversion unit (10) and **in that**, to allow the two electrochemical units (10, 11) to operate at different operating temperatures, notably during the recharging of one of them, said system comprises an additional switch (K3) inserted between the second terminal at a second polarity of the first electrochemical unit (10) and the common point between the changeover switch (K2) and the onboard network (5).

2. System according to Claim 1, **characterized in that** the electromechanical device consists of an electromechanical unit comprising an alternator-starter operating either as alternator - electrical generator mode - to charge the onboard network (5) and the two electrochemical conversion units (10, 11) or as electric motor, notably as starter to perform the starting of the heat engine of the motor vehicle - electric motor mode -, **in that** the alternator-starter comprises a bridge forming an inverter when the alternator -starter operates in electric motor mode, and **in that** limitation means are provided to limit the current in the inverter when the alternator-starter operates in electric motor mode.

3. System according to Claim 1, **characterized in that** the electromechanical device comprises a starter (S) and **in that** limitation means are provided to limit the current in the starter when the latter operates in electric motor mode.

4. System according to Claim 2 or 3, **characterized in that** the limitation means consist of an additional resistor of low value of between 5 and 10 milliohms and inserted on the path between the second position (R) of the changeover switch (K2) and the common point between the second terminal of the switch (K1) and the first terminal of the second electrochemical unit (11).

5. System according to Claim 2 or 3, **characterized in that** the limitation means consist of a distributed resistor, such as a cable C1.

6. System according to Claim 2 or 3, **characterized in that** the electrochemical units exhibit an internal resistance of low value less than 1 Ohm to form the limitation means.

7. System according to any one of the preceding claims, **characterized in that** it comprises a means for closing the changeover switch (K2) then for placing the changeover switch (K2) in the second position (R) such that, to increase the applied voltage, notably for operation in electric motor mode, the electromechanical device (2) is connected in series with the two electrochemical units (10, 11), and to allow operation in electrical generator mode, in recharging the first electrochemical unit (10).

8. System according to any one of the preceding claims, **characterized in that** it comprises a means for placing the changeover switch (K2) in the first position (T), then for closing the switch (K1).

9. System according to any one of the preceding claims, **characterized in that** it comprises safety means (100) to, when the electromechanical device operates in electric motor mode, avoid having the switch (K1) closed when the changeover switch (K2) is in the second position (R).

10. System according to Claim 9, **characterized in that** the safety means comprise an actuator (50) intended to drive a control rod (40), which bears mobile contacts (23, 33) belonging respectively to the switch (K1) and to the changeover switch (K2).

11. System according to Claim 10, **characterized in that** the control rod (14) bears shoulders to limit the displacement of the mobile contacts (22, 23).

12. System according to Claim 11, **characterized in that** a spring (20) bears on the face of a first shoulder (21) and on the top face of the mobile contact (23) of the switch (K1) to stress said mobile contact towards a second shoulder.

13. System according to Claim 12, **characterized in that** two springs (30a, 30b) are mounted compressed between a third shoulder (31) located below the second shoulder (21), and a fourth shoulder located below the third shoulder (31) and **in that** the two springs are mounted in opposition on either side of the mobile contact (33) of the changeover switch (K2).

14. System according to any one of the preceding claims, **characterized in that** the switch (K1) is intended to be connected between the polarity of lower potential and therefore of lower voltage of the onboard network (5) and the terminal of lower voltage of the second electrochemical conversion unit (11), whereas the changeover switch (K2) is intended to be connected between the second polarity of higher voltage of the onboard network (5) and the terminal of higher voltage of the first electrochemical conversion unit (10).

15. System according to any one of Claims 1 to 14, **characterized in that** the switch (K1) is intended to be connected between the polarity of higher potential and therefore of higher voltage of the onboard network (5) and the terminal of higher voltage of the second electrochemical conversion unit (11), whereas the changeover switch (K2) is intended to be connected between the second polarity of lower voltage of the onboard network (5) and the terminal of lower voltage of the first electrochemical conversion unit (10).
